# EUROPEAN PATENT APPLICATION

(11) **EP 1 229 259 A1**
(43) Date of publication of application: **07.08.2002**
(21) Application number: 00974853.4
(22) Date of filing: 09.11.2000
(51) Int. Cl.: F16C 13/00, B32B 1/08, B32B 27/30, B29C 67/04, G03G 15/20

(54) **CYLINDRICAL ARTICLE AND METHOD FOR MANUFACTURING THE SAME**

(30) Priority: 12.11.1999 JP 32290799
(71) Applicant: Daikin Industries, Ltd., Osaka-shi, Osaka 530-8323 (JP)
(72) Inventor: YAMAMOTO,K. Daikin Ind.Ltd.Yodogawaseisakusho, Settsu-shi, Osaka 566-8585 (JP)
(74) Representative: Beetz & Partner Patentanwälte
(86) International application number: JP0007873
(87) International publication number: WO0136831

(57) **Abstract**

On at least one of an inner surface 7 and an outer surface 8 of a cylindrical main body 2, which is porous and is formed of a PTFE resin, a resin other than the PTFE resin is coated to form a coating layer 5, which partially penetrates into through pores 6, whereby a cylindrical body 1 excellent in mechanical strength having the coating layer 5 that is not released can be obtained. The coating layer 5 is formed of a crosslinking resin, such as a fluorine resin and an imide resin, or a PES resin, whereby a cylindrical body 1 excellent in mechanical strength and heat resistance can be obtained. In the case where the cylindrical body 1 is used as a fixing belt, it is preferred that the coating layer 5 is formed only on the inner periphery 3, and the releasing property and the impregnation function with a silicone oil of the PTFE resin are utilized.

## Description

### Technical Field

The present invention relates to a cylindrical body formed by combining a polytetrafluoroethylene resin and another resin, and more particularly, it relates to a cylindrical body that can be suitably used as a fixing belt of an image forming apparatus, such as a duplicator and a laser beam printer.

### Background Art

The image forming apparatus is equipped with a fixing unit for fixing a toner image to recording paper as shown in Japanese Unexamined Patent Publications JP-A 9-244450 (1997), JP-A 9-274402 (1997) and JP-A 10-240044 (1998). The fixing unit is constituted in such a manner that the recording paper runs between a fixing roll and a fixing belt, and the recording paper is heated and pressurized by the fixing roll and the fixing belt to fix the toner image on the recording paper. The constitution, which uses a fixing belt as one of the members for heating and pressurizing, can exert a long nip time, in comparison to a constitution using two fixing rolls, by increasing the nip length of the recording paper. Owing to the constitution, fusion of the toner is accelerated to avoid non-fixed toners, and the toner image is certainly fixed to improve the sharpness of the image. Furthermore, because the fixing belt has a small heat capacity, the total heat capacity is smaller than that in the constitution using two fixing rolls, and the amount of heat that is required to obtain the temperature for fusing the toner can be reduced, whereby energy saving and reduction in standby time can be realized. A fixing belt is being used in fixing units owing to these advantages.

The fixing belt is preferably a seamless belt having no seam, and in order to prevent offset where a toner attached to the fixing belt is transferred to recording paper, it is necessarily has good releasability. As an example of the fixing belt having these features, Japanese Examined Patent Publication JP-B2 2903972 (JP-A 6-250537) discloses a belt made of nickel, in which a fluorocarbon siloxane rubber layer is formed as the outermost layer for improving the toner releasability. As a technique that is substantially equivalent to the former, Japanese Unexamined Patent Publication JP-A 9-73247 (1997) discloses a fixing belt formed of nickel, in which a rubber layer containing a fluorine resin is formed as the outermost layer for improving the toner releasability.

Other conventional techniques have been proposed. Japanese Unexamined Patent Publications JP-A 5-229077 (1993), JP-A 5-305681 (1993), JP-A 7-178741 (1995) and JP-A 8-332675 (1996) disclose a seamless fixing belt formed of a polyimide resin, in which a fluorine resin layer is formed as the outermost layer for improving the releasability. Japanese Unexamined Patent Publication JP-A 8-334998 (1996) discloses a belt having formed as a surface layer a polytetrafluoroethylene resin layer or a perfluoroalkoxyalkane resin layer while it is a belt having ends used immovably.

Further conventional techniques have been proposed. Japanese Unexamined Patent Publication JP-A 11-115066 (1999) discloses a seamless fixing belt formed of a polyether sulfone resin. Japanese Unexamined Patent Publication JP-A 8-44223 (1996) discloses a belt formed of a polyether sulfone resin while it is a belt having a seam.

The belts disclosed in JP-B2 2903972, JP-A 9-73247, JP-A 5-229077, JP-A 5-305681, JP-A 7-178741, JP-A 8-332675 and JP-A 8-334998 are improved in releasability by forming a fluorine rubber layer or a fluorine resin layer as the outermost layer. However, they have such a problem in that adhesion to the inner layer is low due to the characteristics of the materials, and the outermost layer is liable to be released upon running and driving to lower the durability. Even though the outermost layer is not released, a sufficient thickness of the outermost layer cannot be obtained because it is formed by coating, and thus the outermost layer is liable to be damaged due to friction on the outermost layer caused by paper powder generated by the recording paper, whereby it has a problem of low durability.

Furthermore, there are some cases where the toner releasability becomes insufficient only by the fluorine rubber layer and the fluorine resin layer, and in the case of a duplicator, for example, offset of the toner occurs by the fixing speed associated with the duplicating speed. In JP-A 9-73247 described in the foregoing, the toner releasability is improved by coating a silicone oil on the outermost layer, but it has such a problem in that the retention property of the silicone oil is low only by coating. The fixing belts disclosed in JP-A 11-115066 and JP-A 8-44223 cannot absolutely prevent offset, and the fixing units disclosed in JP-A 9-244450, JP-A 9-274402 and JP-A 10-240044 do not have a constitution that can absolutely prevent offset.

An object of the invention is to provide a cylindrical body having high durability formed by combining a polytetrafluoroethylene resin and another resin, a method for manufacturing the same, a fixing belt, a fixing apparatus and an apparatus for forming an image.

Another object of the invention is to provide a cylindrical body excellent in durability capable of being used as a fixing belt that can absolutely prevent offset, and a method for manufacturing the same.

### Disclosure of Invention

The invention relates to a cylindrical body comprising a cylindrical main body having plural through pores and comprising a porous polytetrafluoroethylene resin; and a coating layer comprising a resin other than a polytetrafluoroethylene resin, the coating layer being formed on at least either an inner or an outer periphery of the cylindrical main body and partially penetrating into the through pores.

According to the invention, the cylindrical main body has plural through pores, and the coating layer is formed as partially penetrating in the through pores, whereby the coating layer can be formed on the cylindrical main body in such a manner that the coating layer is interdigitated in the cylindrical main body to realize firm adhesion. Owing to the configuration, even when the cylindrical main body is formed of a polytetrafluoroethylene resin (hereinafter sometimes abbreviated as PTFE), which has less affinity with other resins, the coating layer formed of other resins can be formed on one of the inner periphery and the outer periphery of the cylindrical main body with firm adhesion.

The coating layer may be formed on one of the inner periphery and the outer periphery. The coating layer may be formed on both the inner periphery and the outer periphery, and in this case, the coating layers formed on the inner periphery and the outer periphery may be formed of the same resin or different resins. The coating layer may have a single layer structure or a multi-layer structure.

The cylindrical body may be a fixing belt and it is used, for example, in such a manner that the fixing belt runs in the periphery direction by hanging on plural running rolls and sandwiches a recording medium on an outer surface thereof with another fixing member, such as a fixing roll, so as to fix a toner image carried on a recording medium on the recording medium. In the cylindrical body used as a fixing belt, because the cylindrical main body constitutes the outermost layer, and the outer surface is composed of the cylindrical main body, good toner releasability is obtained owing to the characteristics of the polytetrafluoroethylene resin. Because the cylindrical body has the coating layer on the inner periphery of the cylindrical main body to reinforce the cylindrical main body, the thickness of the cylindrical main body in contact with the recording medium can be large in comparison to the case where the outer layer in contact with the recording medium is formed by coating, and thus the layer excellent in releasability on the cylindrical main body is not lost even when friction occurs.

A silicon oil may be retained, and in this case, the cylindrical main body can retain a silicon oil by impregnation owing to the pores thereof, and the retaining property of a silicone oil is improved in comparison to the case where it is simply coated on the outer surface. Consequently, it can be used in such a state that a silicone oil is impregnated and firmly retained thereon.

The coating layer may have a single layer structure or a multi-layer structure. The toner releasability that may be sufficient for preventing offset can be obtained only with the characteristics of polytetrafluoroethylene depending on the fixing speed, and therefore, a silicone oil is not necessarily used, but the design may be appropriately made.

The invention is characterized in that the cylindrical body has a peripheral tensile yield load of 2.5 kgf or more per axial width of 1 cm.

According to the embodiment, in the case where the cylindrical body receives a peripheral tensile load, the cylindrical body maintains elasticity upon receiving a tensile load in the periphery direction when the load provides a peripheral tensile yield load of less than 2.5 kgf per width of 1 cm in a axial direction, whereby the performance is maintained. For example, a belt installed in an apparatus, such as a duplicator, does not receive a peripheral load of 2.5 kgf or more per axial width of 1 cm. Therefore, the cylindrical body realizes high durability and can be preferably used as a belt, such as a fixing belt, of the apparatus, such as a duplicator.

Furthermore, the invention is characterized in that the cylindrical body has a peripheral tensile yield stress of 150 kgf/cm² or more.

According to the embodiment, in the case where the cylindrical body receives a peripheral tensile load, the cylindrical body maintains elasticity upon receiving a tensile load in the periphery direction when the load provides a tensile stress of less than 150 kgf/cm², whereby the performance is maintained. For example, a belt installed in an apparatus, such as a duplicator, does not receive a tensile load that causes a peripheral tensile stress of 150 kgf/cm² or more. Therefore, the cylindrical body realizes high durability and can be preferably used as a belt, such as a fixing belt, of the apparatus, such as a duplicator.

The invention is characterized in that the cylindrical body has a peripheral tensile elastic coefficient of 7,000 kgf/cm² or more.

According to the embodiment, in the case where the cylindrical body receives a peripheral tensile load, the dimension thereof in the periphery direction is not largely changed because it has a peripheral tensile elastic coefficient of 7,000 kgf/cm² or more. For example, a belt installed in an apparatus, such as a duplicator, does not receive a tensile load that largely changes the dimension in the periphery direction of a belt having such a tensile elastic coefficient. Therefore, the cylindrical body can be used as a belt, such as a fixing belt, of the apparatus, such as a duplicator, in a preferred state with less elongation.

The invention is characterized in that the cylindrical body has a seamless cylindrical form having an outer diameter of from 10 to 100 mm and a thickness of from 50 to 200 µm, the pores of the cylindrical main body have a maximum pore diameter of 0.2 µm or less, a porosity of from 25 to 50% and an air permeability of from 500 to 30,000 second per 100 cc, and the cylindrical main body has a center line average roughness Ra of 0.5 µm or less with respect to surface roughness.

According to the embodiment, because the cylindrical main body has a seamless cylindrical form and has a center line average roughness Ra of 0.5 µm on the inner surface, which are uniform, and the outer surface, and the cylindrical main body has an outer diameter of from 10 to 100 mm, a uniform coating layer can be easily formed. Because the cylindrical main body has a thickness of from 50 to 200 µm, such a cylindrical body can be obtained that sufficient durability is obtained, and it is easy that the curvature thereof can be partially changed.

Because the pores of the cylindrical main body have an air permeability of from 500 to 30,000 second per 100 cc, the coating layer appropriately penetrates into it and thus can be adhered to the cylindrical main body with sufficiently high adhesion force. Because the maximum pore diameter is 0.2 µm or less, and the porosity is from 25 to 50%, the foregoing air permeability can be attained.

The invention is characterized in that the resin constituting the coating layer is a crosslinking resin.

According to the embodiment, because the resin constituting the coating layer is a crosslinking resin, the tensile strength of the coating layer is increased, and the heat resistance thereof is improved.

The invention is characterized in that the resin constituting the coating layer is an imide resin.

According to the embodiment, because the resin constituting the coating layer is an imide resin, a coating layer having high heat resistance can be realized.

The invention is characterized in that the resin constituting the coating layer is a fluorine resin.

According to the embodiment, because the resin constituting the coating layer is a fluorine resin, a coating layer having high heat resistance can be realized.

The invention is characterized in that the resin constituting the coating layer is a polyether sulfone resin.

According to the embodiment, because the resin constituting the coating layer is a polyether sulfone resin, the tensile strength of the coating layer is increased, and the heat resistance thereof is improved.

The invention also relates to a cylindrical body comprising:
a cylindrical main body having plural through pores and comprising a porous polytetrafluoroethylene resin;
a coating layer comprising a synthetic resin other than a polytetrafluoroethylene resin; and
an intervening layer having good wettability with both the polytetrafluoroethylene resin and the synthetic resin constituting the coating layer,
the intervening layer being disposed between at least one of an inner periphery and an outer periphery of the cylindrical main body and the coating layer, and partially penetrating in the through pores.

The invention is characterized in that the intervening layer comprises a primer.

The invention is characterized in that the intervening layer comprises rubber.

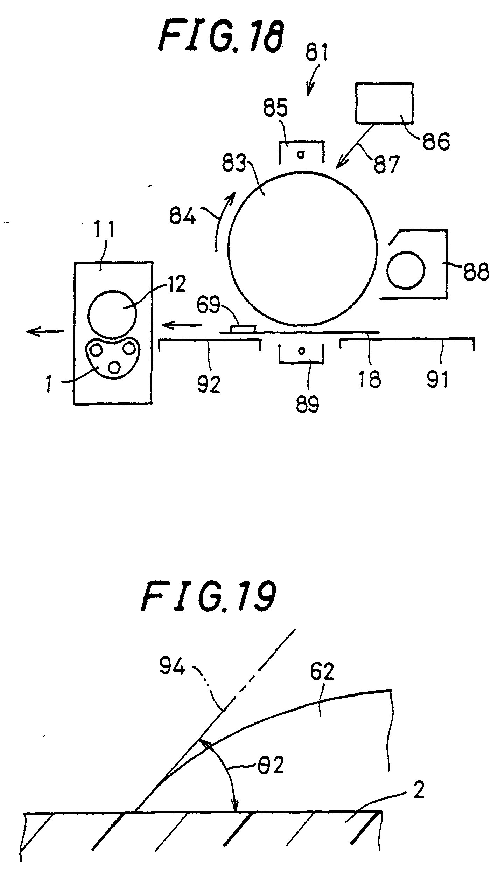

Upon forming a coating layer of a synthetic resin other than a PTFE resin on an inner or outer periphery of a cylindrical main body formed of a PTFE resin by directly applying the synthetic resin thereto, it brings about such a problem when the coating layer does not have good wettability with the cylindrical main body in that it is difficult that the coating layer is coated over the entire surface of the inner or outer periphery of the cylindrical main body to a uniform thickness. In order to solve the problem, according to the invention, an intervening layer is formed between the cylindrical main body and the coating layer. The intervening layer has good wettability with both the PTFE resin and the synthetic resin constituting the coating layer. The material constituting the intervening layer may be either a primer or rubber. The material constituting the intervening layer may be selected to satisfy the equations θ1 > θ2 and θ1 > θ3, in which θ1 represents a contact angle of the coating layer upon directly dropping a liquid coating layer containing a solvent on the surface of the PTFE cylindrical main body, θ2 represents a contact angle of the intervening layer upon dropping a liquid intervening layer containing a solvent on the surface of the PTFE cylindrical main body, and θ3 represents a contact angle of the coating layer upon dropping a liquid coating layer containing a solvent on the surface of the intervening layer. The contact angles θ1, θ2 and θ3 will be described later with reference to Fig. 19.

The invention also relates to a method for manufacturing a cylindrical body comprising the steps of:
coating a resin different from a polytetrafluoroethylene resin on at least one of an inner surface and an outer surface of a cylindrical main body; and
curing the resin coated on the cylindrical main body,
the cylindrical main body having a seamless cylindrical form having an outer diameter of from 10 to 100 mm and a thickness of from 50 to 200 µm, having pores having a maximum pore diameter of 0.2 µm or less, a porosity of from 25 to 50% and an air permeability of from 500 to 30, 000 second per 100 cc, and having a center line average roughness Ra of 0.5 µm or less with respect to surface roughness.

According to the invention, a cylindrical body is formed by coating a resin different from a polytetrafluoroethylene resin on at least one of an inner surface and an outer surface of a cylindrical main body formed of a polytetrafluoroethylene resin, and then curing the resin. Since the cylindrical main body is porous, the resin constituting the coating layer penetrates into the pores upon coating the resin constituting the coating layer on the inner and outer surfaces of the cylindrical main body, whereby the resin is easily attached to the cylindrical main body without repelling to make the coating operation easy. Furthermore, because the coating layer is formed to penetrate into the pores, firm adhesion between the cylindrical main body and the coating layer is realized.

Because the cylindrical main body has a center line average roughness Ra of 0.5 µm with respect to surface roughness on the inner surface and the outer surface, which are uniform, and has an outer diameter of from 10 to 100 mm, a resin for forming the coating layer can be easily coated, and a uniform coating layer is easily formed. Because the cylindrical main body has a thickness of from 50 to 200 µm, a cylindrical body having sufficient durability can be obtained, and it is easy that the curvature thereof can be partially changed.

Because the cylindrical main body has pore characteristics of an air permeability of from 500 to 30,000 second per 100 cc, the coated resin appropriately penetrates into the pores to form the coating layer, which can be adhered to the cylindrical main body with sufficient adhesion force. Because the maximum pore diameter is 0.2 µm or less, and the porosity is from 25 to 50%, the foregoing air permeability can be obtained.

Because the through pores communicate over the inner surface and the outer surface to make ways of escape for air in the pores, no bubble is formed by enclosing air between the cylindrical main body and the resin constituting the coating layer upon forming the coating layer by coating a resin on at least one of the inner surface and the outer surface of the cylindrical main body, whereby no unevenness is formed by bubbles, and a coating layer having a uniform surface can be obtained. Furthermore, because the resin constituting the coating layer is allowed to penetrate by pushing air inside the pores out, the resin penetrates into the pores without forming unevenness like brush traces owing to actions of surface tension, whereby a coating layer having a uniform surface can be obtained.

The invention also relates to a method for manufacturing a cylindrical body comprising the steps of:
coating a resin different from a polytetrafluoroethylene resin on an inner surface of a cylindrical main body; and
curing the resin coated on the cylindrical main body,
the cylindrical main body having a seamless cylindrical form with a polytetrafluoroethylene and having an outer diameter of from 10 to 100 mm and a thickness of from 50 to 200 µm, having pores having a maximum pore diameter of 0.2 µm or less, a porosity of from 25 to 50% and an air permeability of from 500 to 30,000 second per 100 cc, and having a center line average roughness Ra of 0.5 µm or less with respect to surface roughness.

According to the invention, a cylindrical body is formed by coating a resin different from a polytetrafluoroethylene resin on an inner surface of a cylindrical main body formed of a polytetrafluoroethylene resin, and then curing the resin. Since the cylindrical main body is porous, the resin constituting the coating layer penetrates into the pores upon coating the resin constituting the coating layer on the inner surface of the cylindrical main body, whereby the resin is easily attached to the cylindrical main body without repelling to make the coating operation easy. Furthermore, because the coating layer is formed to penetrate into the pores, firm adhesion between the cylindrical main body and the coating layer is realized.

Because the cylindrical main body has a center line average roughness Ra of 0.5 µm with respect to surface roughness on the inner surface and the outer surface, which are uniform, and has an outer diameter of from 10 to 100 mm, a resin for forming the coating layer can be easily coated, and a uniform coating layer is easily formed. Because the cylindrical main body has a thickness of from 50 to 200 µm, a cylindrical body having sufficient durability can be obtained, and it is easy that the curvature thereof can be partially changed.

Because the cylindrical main body has pore characteristics of an air permeability of from 500 to 30,000 second per 100 cc, the coated resin appropriately penetrates into the pores to form the coating layer, which can be adhered to the cylindrical main body with sufficient adhesion force. Because the maximum pore diameter is 0.2 µm or less, and the porosity is from 25 to 50%, the foregoing air permeability can be obtained.

Because the through pores communicate over the inner surface and the outer surface to make ways of escape for air in the pores, no bubble is formed by enclosing air between the cylindrical main body and the resin constituting the coating layer upon forming the coating layer by coating a resin on the inner surface of the cylindrical main body, whereby no unevenness is formed by bubbles, and a coating layer having a uniform surface can be obtained. Furthermore, because the resin constituting the coating layer is allowed to penetrate by pushing air inside the pores out, the resin penetrates into the pores without forming unevenness like brush traces owing to actions of surface tension, whereby a coating layer having a uniform surface can be obtained.

The invention is characterized in that the cylindrical main body is manufactured by forming a raw cylindrical body by paste extrusion, expanding the raw cylindrical body at least in a radial direction thereof at an expanding temperature of less than a melting point but equal to or more than a softening point thereof, and subjecting the expanded raw cylindrical body to a thermal fixing treatment at a thermal fixing temperature of equal to or more than the expanding temperature but less than the melting point.

According to the embodiment, because the cylindrical main body is formed by expanding the raw cylindrical body at least in a radial direction thereof at an expanding temperature of less than a melting point but equal to or more than a softening point, followed by subjecting to the thermal fixing treatment, a cylindrical main body having uniform pores can be easily produced.

The invention is characterized in that the cylindrical main body is manufactured by forming a raw cylindrical body by paste extrusion, expanding the raw cylindrical body at least in a radial direction thereof at an expanding temperature of less than a melting point but equal to or more than a softening point thereof, subjecting the expanded raw cylindrical body to a thermal fixing treatment at a thermal fixing temperature of the expanding temperature of equal to or more than the expanding temperature but less than the melting point, and subjecting a surface of the raw cylindrical body having been subjected to the thermal fixing treatment, on which a coating layer is to be formed, to a defluorination treatment.

According to the embodiment, because the cylindrical main body is formed by expanding the raw cylindrical body at least in a radial direction thereof at an expanding temperature of less than a softening point, followed by subjecting to the thermal fixing treatment, a cylindrical main body having uniform pores can be easily produced. Furthermore, because the surface of the cylindrical main body, on which a coating layer is to be formed after subjecting to the thermal fixing treatment, is subjected to the defluorination treatment, the cylindrical main body have good affinity with the resin constituting the coating layer, and the resin is liable to be attached on the surface by preventing repelling upon coating to improve the interface affinity, whereby further firm adhesion can be realized.

The invention is characterized in that the cylindrical main body is manufactured by forming a raw cylindrical body by paste extrusion, subjecting a surface of the raw cylindrical body, on which a coating layer is to be formed, to a defluorination treatment, expanding the raw cylindrical body having been subjected to the defluorination treatment, at least in a radial direction thereof at an expanding temperature of less than a melting point and equal to or more than a softening point, and subjecting the expanded raw cylindrical body to a thermal fixing treatment at a thermal fixing temperature of equal to or more than the expanding temperature but less than a temperature, at which decomposition of the polytetrafluoroethylene resin considerably occurs.

According to the embodiment, because the cylindrical main body is formed by expanding the raw cylindrical body at least in a radial direction thereof at an expanding temperature of less than a softening point, followed by subjecting to the thermal fixing treatment, a cylindrical main body having uniform pores can be easily produced. Because the surface of the raw cylindrical body before expansion operation, on which a coating layer is to be formed, is subjected to the defluorination treatment, the cylindrical main body have good affinity with the resin constituting the coating layer, and the resin is liable to be attached on the surface by preventing repelling upon coating to improve the interface affinity, whereby further firm adhesion can be realized. Furthermore, because the defluorination treatment is carried out before forming pores, i.e., before the expansion operation, even when the defluorination treatment is carried out by coating a treating agent, the treating agent does not penetrate in the pores and does not remain therein after the treatment, and thus a porous cylindrical main body having been subjected to the defluorination treatment can be formed without the treating agent for the defluorination treatment remaining in the pores.

The invention is characterized in that a resin constituting the coating layer is coated in a solution state before curing.

According to the embodiment, the resin constituting the coating layer is not particularly limited as far as it is in a solution state before curing, and is appropriately selected based on the heat resistance and the cost of raw materials. For example, it may be one of a polyimide resin, a polyamideimide resin, a fluorine thermosetting resin and a polyether sulfone resin, and in this case, the coating layer thus formed has high heat resistance. Because the resin constituting the coating layer is coated in a solution state before curing, it has a low viscosity and easily penetrates in the pores. The coating layer can be easily formed through curing by drying.

In the foregoing inventions, the polytetrafluoroethylene resin constituting the cylindrical main body may be not only a homopolymer resin of tetrafluoroethylene, but also a so-called modified polytetrafluoroethylene obtained by copolymerizing a copolymerizable monomer in an amount of 2% by weight or less, and preferably from 0.01 to 1% by weight. Examples of the copolymerizable monomer include perfluoroalkyl vinyl ether, chlorotrifluoroethylene and hexafluoropropylene.

The invention also relates to a fixing belt for fixing by heating and pressurizing a toner image carried on a recording medium, the fixing belt being one of the cylindrical bodies mentioned above.

According to the invention, because the cylindrical main body of the fixing belt has plural through pores, and the coating layer is formed as partially penetrating in the through pores, whereby the coating layer can be formed on the cylindrical main body in such a manner that the coating layer is interdigitated in the cylindrical main body to realize firm adhesion. Owing to the configuration, even when the cylindrical main body is formed of a polytetrafluoroethylene resin, which has less affinity with other resins, the coating layer formed of other resins can be formed on the inner periphery of the cylindrical main body with firm adhesion. The intervening layer may be formed between the cylindrical main body and the coating layer.

The invention also relates to a fixing unit comprising:
the fixing belt mentioned above;
a fixing roll for conveying a recording material having a toner image on one surface thereof by sandwiching with an outer surface of the fixing belt; and
a heater provided inside the fixing roll for heating and melting the toner image.

The invention also relates to a fixing unit comprising:
the fixing belt mentioned above;
a fixing roll for conveying a recording material having a toner image on one surface thereof by sandwiching with an outer surface of the fixing belt; and
a heater provided in a space surrounded by the fixing belt for heating and melting the toner image.

The invention also relates to an apparatus for forming an image comprising:
a photoreceptor formed to have no end in a periphery direction thereof;
means for exposing a surface of the photoreceptor corresponding to an image to form an electrostatic latent image;
means for developing the electrostatic latent image on the photoreceptor with a toner to visualize the image;
means for transferring a toner image thus visualized on the photoreceptor to one surface of a recording medium; and
the fixing unit mentioned above for fixing the recording medium having the toner image transferred by the transferring means.

According to the invention, the fixing unit equipped with the fixing belt according to the invention is installed in an apparatus for forming an image by the electrophotographic method, whereby a synthetic resin excellent in toner releasability is used as the material of the coating layer to improve the durability.

The intervening layer may be composed of a single layer or plural layers formed of materials different from each other.

### Brief Description of Drawings

Other and further objects, features, and advantages of the invention will be more explicit from the following detailed description taken with reference to the drawings wherein:
Fig. 1 is an enlarged cross sectional view showing a part of a cylindrical body 1 as one embodiment of the invention;
Fig. 2 is a perspective view showing the cylindrical body 1;
Fig. 3 is a cross sectional view showing the cylindrical body 1 on the axial line L1;
Fig. 4 is a perspective view showing a part 19 of the cylindrical body 1;
Fig. 5 is a perspective view showing a small piece 9 composed of the part 19 of the cylindrical body 1;
Fig. 6 is a graph showing the relationship between stress and distortion for describing the mechanical strength of the cylindrical body 1;
Fig. 7 is a schematic cross sectional view showing a fixing unit 11 equipped with the cylindrical body 1 as a fixing belt;
Fig. 8 is a schematic cross sectional view showing a roll device 45 of the fixing unit 11;
Figs. 9A, 9B and 9C are diagrams for describing a production method of a cylindrical main body 2;
Fig. 10 is a schematic elevational view showing another fixing unit 11c equipped with the cylindrical body 1 as a fixing belt;
Fig. 11 is an enlarged cross sectional view showing a part of a cylindrical body 1a as another embodiment of the invention;
Fig. 12 is an enlarged cross sectional view showing a part of a cylindrical body 1b as a further embodiment of the invention;
Fig. 13 is an enlarged cross sectional view showing a part of a cylindrical body 61 as a still further embodiment of the invention;
Fig. 14 is an enlarged cross sectional view showing a part of a cylindrical body 61a as a still further embodiment of the invention;
Fig. 15 is an enlarged cross sectional view showing a part of a cylindrical body 61b as a still further embodiment of the invention;
Fig. 16 is a schematic cross sectional view showing a fixing unit 11d as another embodiment of the invention;
Fig. 17 is a schematic cross sectional view showing a fixing unit 11e as a further embodiment of the invention;
Fig. 18 is a schematic cross sectional view showing an apparatus for forming an image 81 of the electrophotographic method having the fixing unit 11 installed therein; and
Fig. 19 is a diagram for describing a contact angle θ2 upon forming an intervening layer 62 by coating on the surface of the cylindrical main body 2.

### Best Mode for Carrying out the Invention

Preferred embodiments of the cylindrical body, the method for manufacturing the same, the fixing belt, the fixing unit and the apparatus for forming an image according to the invention will be described below with reference to the attached drawings.

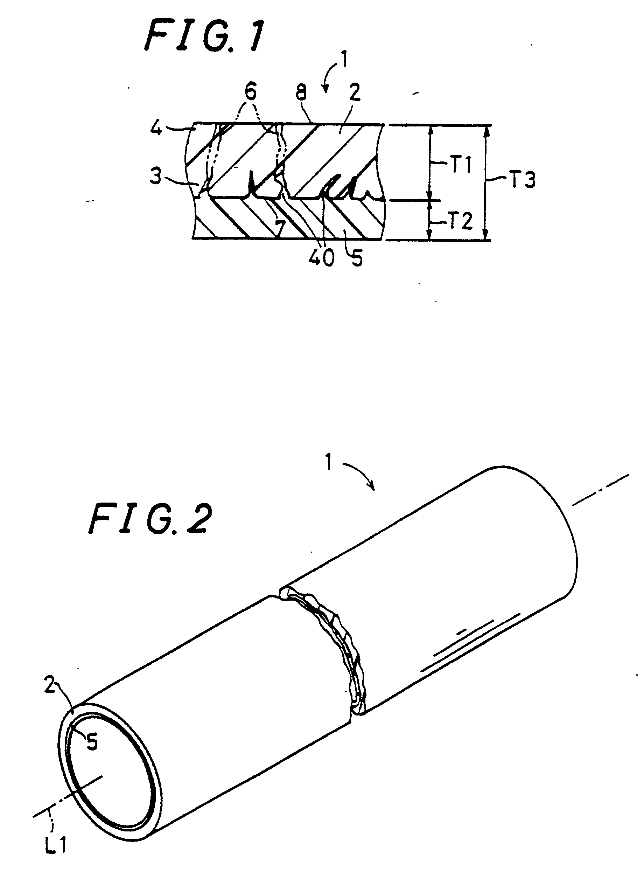

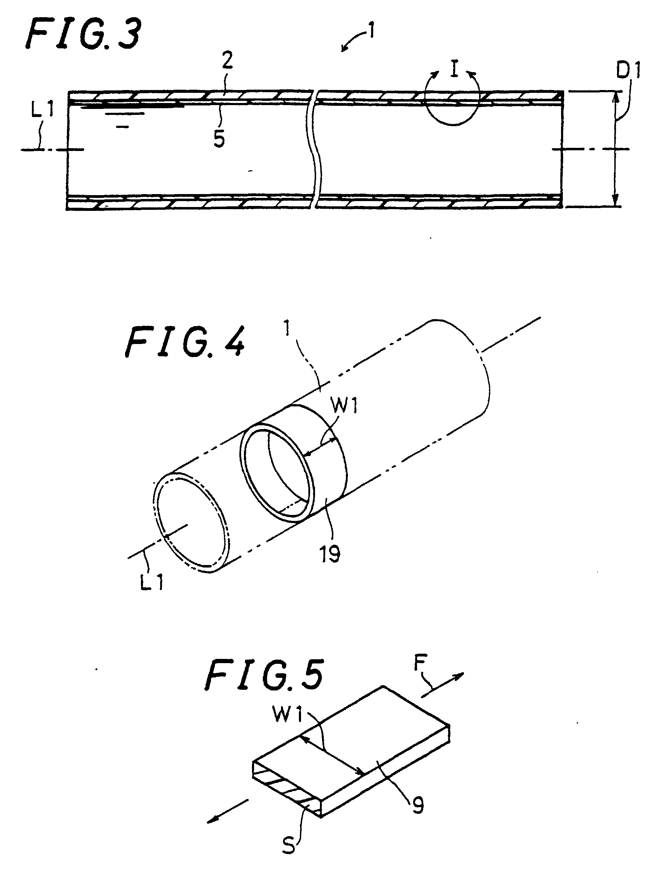

Fig. 1 is an enlarged cross sectional view showing a part of a cylindrical body 1 as one embodiment of the invention, Fig. 2 is a perspective view showing the cylindrical body 1, and Fig. 3 is a cross sectional view showing the cylindrical body 1 on the axial line L1. In Fig. 1, the section I in Fig. 3 is shown with enlargement. The cylindrical body 1 contains a cylindrical main body 2 and a coating layer 5 on at least one of inner and outer peripheries 3, 4 of the cylindrical main body 2, and on the inner periphery 3 in this embodiment. The cylindrical body 1 may be formed to have wither a substantially cylindrical shape under the state where no external force is applied, or other shape. The cylindrical main body 2 is porous as having plural through pores 6 and is formed of a polytetrafluoroethylene (hereinafter sometimes referred to as "PTFE") resin. Only two of the through pores 6 are described as representatives with virtual lines in Fig. 1 for simplification of the figure. The coating layer 5 is formed of a resin other than a PTFE resin and formed in such a state that it partially penetrates in the through pores 6 as shown in Fig. 1.

The cylindrical main body 2 has a seamless cylindrical shape having no seam that has an outer diameter D1 of from 10 to 100 mm and a thickness T1 of from 50 to 200 µm. The porous characteristics of the cylindrical main body 2 is a maximum pore diameter of 0.2 µm or less, a porosity of from 25 to 50% and an air permeability of from 500 to 30,000 second per 100 cc. The air permeability is also referred to as a Gurley number and can be measured according to JIS P8117 1980. The surface roughness of the cylindrical main body 2, specifically the surface roughnesses of its inner and outer surfaces 7, 8 are 0.5 µm or less in terms of center line average roughness Ra.

It is preferred that the through pores 6 are uniformly dispersed without maldistribution over the cylindrical main body 2 to make macroscopic uniformity thereof. The through pores 6 preferably have such a shape that the inner shape thereof is not uniform but changes in the thickness direction of the cylindrical main body 2.

The PTFE resin constituting the cylindrical main body may be a homopolymer resin of tetrafluoroethylene or a so-called modified polytetrafluoroethylene obtained by copolymerizing a copolymerizable monomer in an amount of 2% by weight or less, and preferably from 0.01 to 1% by weight. Examples of the copolymerizable monomer include perfluoroalkyl vinyl ether, chlorotrifluoroethylene and hexafluoropropylene.

The thickness T2 of the coating layer 5 (which designates the thickness from the inner surface of the cylindrical main body 2 in this embodiment) is, for example, from 20 to 50 µm. The resin constituting the coating layer 5 is a crosslinking resin, and more specifically it may be a fluorine resin other than a PTFE resin. The fluorine resin contains a fluorine compound as a main component and a curing agent that reacts with a functional group of the main component. As the fluorine compound as the main component, one of Zeffle GK-500 (a trade name, produced by Daikin Industries, Ltd.), Zeffle GK-510 (a trade name, produced by Daikin Industries, Ltd.), Lumiflon LF-200 (a trade name, produced by Asahi Glass Company) , Lumiflon LF-400 (a trade name, produced by Asahi Glass Company) , Fluonate K-700 (a trade name, produced by Dainippon Ink and Chemicals, Inc.), Zaflon FC-110 (a trade name, produced by Toagosei Co., Ltd.), Zaflon FC-220 (a trade name, produced by Toagosei Co., Ltd.) and Cefral Coat (a trade name, produced by Central Glass Co., Ltd.) maybe used. As the curing agent, one of isocyanate, melamine and blocked isocyanate may be used.

The resin constituting the coating layer 5 may be an imide resin as the crosslinking resin. The imide resin may be one of a polyimide resin, a polyaminobismaleimide resin and a polyamideimide resin. The resin constituting the coating layer 5 may also be a polyether sulfone (abbreviated as PES) resin.

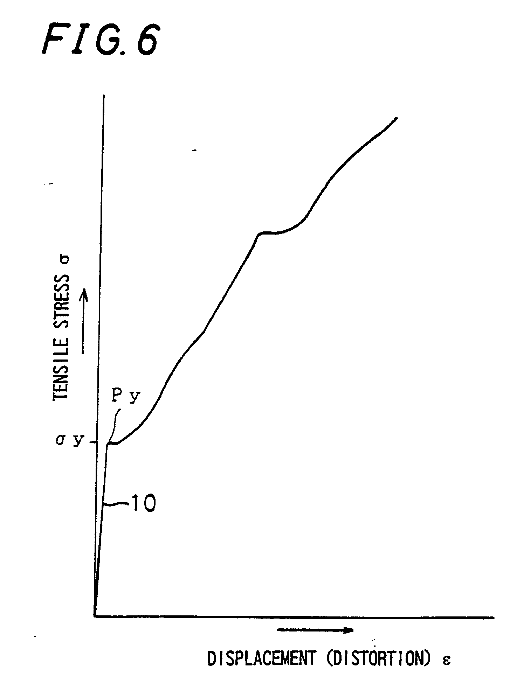

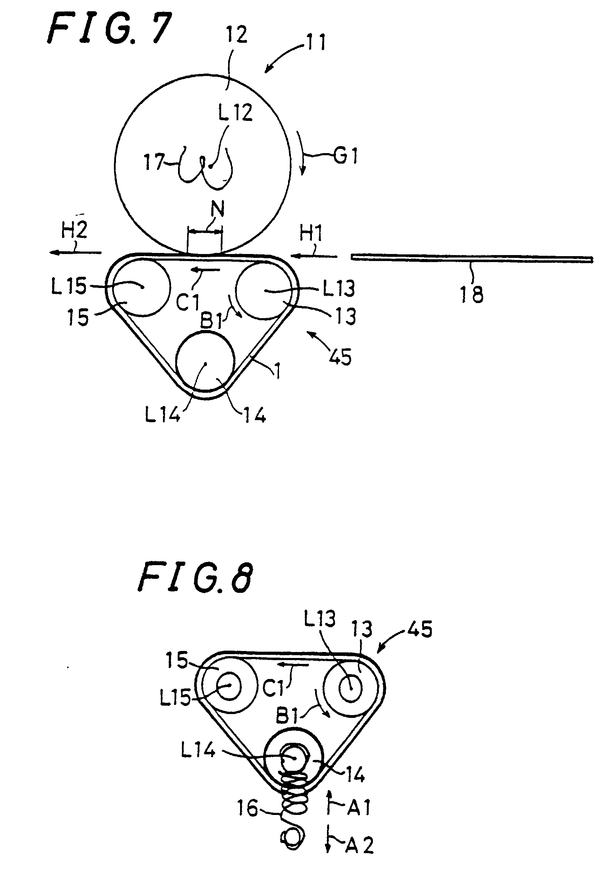

Fig. 4 is a perspective view showing a part 19 of the cylindrical body 1 for describing the mechanical strength of the cylindrical body 1, Fig. 5 is a perspective view showing a small piece 9 composed of the part 19 of the cylindrical body 1, and Fig. 6 is a graph showing the relationship between stress and distortion mentioning the strength of the cylindrical body 1 with respect to the peripheral tensile force. In Fig. 6, the abscissa shows the peripheral distortion ε of the cylindrical body 1, and the ordinate shows the stress σ caused in the cylindrical body 1. The peripheral tensile yield load Fy of the cylindrical body 1 is 2.5 kgf or more per width of 1 cm in the axial direction. The peripheral tensile yield stress σy of the cylindrical body 1 is 150 kgf/cm² or more. The peripheral tensile elastic coefficient E of the cylindrical body 1 is 7,000 kgf/cm² or more.

The cylindrical body 1 is an elastic body, in which upon applying a peripheral tensile load F, the tensile stress σ caused in the cylindrical body 1 and the peripheral distortion ε of the cylindrical body 1 have the relationship shown in Fig. 6. In order to easiness of understanding, descriptions will be made under assumption that the breakdown point Py and the elastic limit agree with each other. The tensile yield load Fy is a tensile load, at which the cylindrical body 1 reaches the breakdown point Py to be broken. Specifically, as shown in Fig. 4, apart 19 having a dimension W1 in a direction in parallel to an axis line L1 in the axial direction (hereinafter referred to as a "width") of 1 cm is cut from the cylindrical body 1, and the part 19 is cut at one position in the periphery direction to form a small piece 9 in a strip form shown in Fig. 5. When a tensile load F is applied to the small piece 9 in a direction corresponding to the periphery direction of the cylindrical body 1, a load when the small piece 9 is broken is designated as the tensile yield load Fy.

The tensile yield stress σy is a tensile stress, at which the cylindrical body 1 reaches the breakdown point Py to be broken, and therefore, when the tensile yield load Fy is applied, the tensile yield stress σy is formed in the cylindrical body 1. As more specifically described with reference to the small piece 9, the tensile yield stress σy is a value obtained by dividing the tensile yield load Fy by a surface area S of the small piece 9 perpendicular to the periphery direction (i.e., σy=Fy/S). The tensile elastic coefficient E is a value obtained by dividing the tensile stress σ by the distortion ε (E = σ/ε) in the region 10 where the cylindrical body exhibits elastic deformation until the elastic limit (i.e., the region shown by the increasing slanted straight line in Fig. 6), and corresponds to the gradient in the elastic deformation region 10 in Fig. 6.

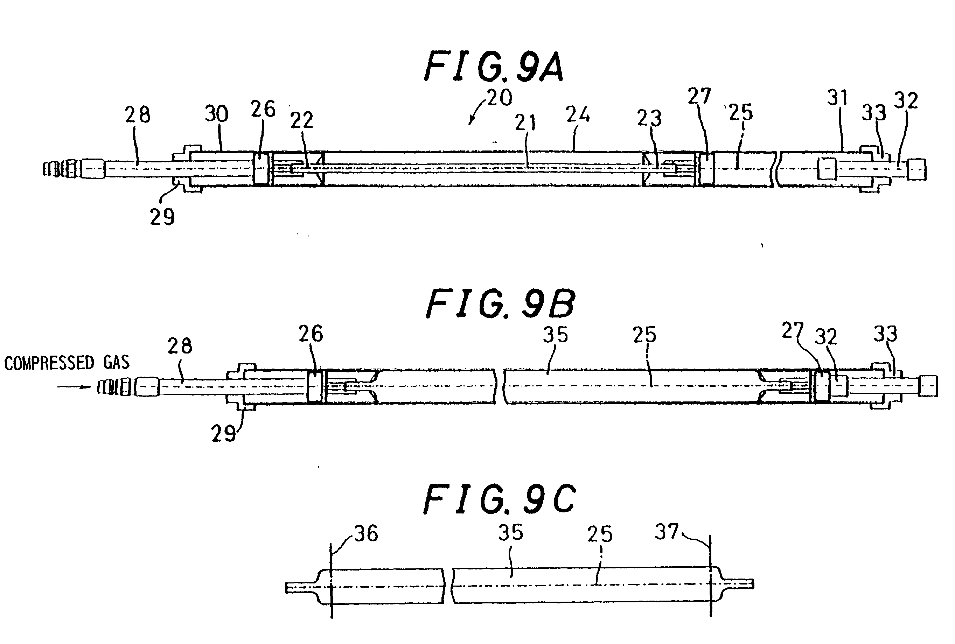

Fig. 7 is a schematic elevational cross sectional view showing a fixing unit 11 equipped with a fixing belt composed of the cylindrical body 1, and Fig. 8 is a schematic elevational cross sectional view showing a roll device 45 having belt controls 13 to 15 for driving the fixing belt composed of the cylindrical body 1. The cylindrical body 1 is provided as a fixing belt in a fixing unit 11 equipped in an apparatus for forming an image, such as a duplicator and a laser beam printer. The fixing unit 11 contains the fixing belt 1 (the same symbol as the cylindrical body is attached because they are identical to each other) and a fixing roll 12.

The fixing belt 1 is hanged and wounded on plural (three in this embodiment) belt rolls 13, 14 and 15 rotatable around axis lines L13 to L15 in parallel to each other, respectively, in the roll device 45, and is provided as a seamless belt running in the periphery direction associated with rotation of the belt rolls 13 to 15. Because the fixing belt 1 has a small total thickness T3 (= T1 + T2), it can easily suffer such deformation that the cross sectional shape perpendicular to the axis is changed without change of the dimension in the periphery direction, and thus it can be preferably used as a seamless belt.

The belt rolls 13 and 15 are fixed at the axis lines L13 and L15, respectively, and the belt roll 14 is on the axis line L14 that is movable in both a direction A1 approaching the belt rolls 13 and 15 and a direction A2 getting away from them. The belt roll 13 is a driving roll that is rotatablly driven in a rotation direction B1 (the anticlockwise direction in Figs. 7 and 8) around the axis line L13 with driving means, such as a motor. The belt roll 14 is a tension roll that receives a force displacing the axis line L14 in the direction A2 getting away from the belt controls 13 and 15 by spring means 16, so as to apply tension to the fixing belt 1. By applying the spring force to the belt roll 14, the fixing belt 1 receives the tension and hanged and wounded in such a state that no slippage occurs with the belt rolls 13 to 15, and when the belt roll 13 is rotationally driven, the fixing belt 1 is driven thereby to run in a prescribed running direction C1. The running direction C1 is such a direction departing from the belt roll 13 and through the belt roll 15 reaching the belt roll 14.

The fixing roll 12 is supported rotatablly around the axis line L12, and the axis line L12 is provided in parallel to the axis lines L13 to L15 of the belt controls 13 to 15. The fixing roll 12 is driven to rotate in a rotation direction G1 (the clockwise direction in Fig. 7) around the axis line L12 by driving means, such as a motor. The fixing belt 1 and the fixing roll 12 are in contact with each other with elastic rebound over a prescribed nip length N in a direction perpendicular to the rotation axis lines of the rolls 12 to 15. In the region where the fixing belt 1 and the fixing roll 12 are in contact with each other, the moving directions and the moving speeds of the surfaces in contact with each other are the same as each other. The fixing roll 12 contains heating means 17 inside, which can heat the fixing roll 12.

Recording paper 18 having a non-fixed toner image carried thereon formed by xerography using, for example, a photosensitive drum is fed to the fixing unit 11 with transporting means. The recording paper 18 as a recording medium passes between the fixing belt 1 and the fixing roll 12 as shown by arrows H1 and H2 by rotation of the fixing belt 1 and the fixing roll 12. At this time, in the contact region in the nip length N, the recording paper 18 is pressurized by sandwiching in the thickness direction thereof with the fixing belt 1 and the fixing roll 12, and heated by applying heat from the heating means 17 through fixing roll 12, whereby the carried toner image is fixed on the recording paper 18.

Upon fixation in the fixing unit 11 according to the foregoing manner, the tensile load applied to the fixing belt 1 is sufficiently lower than the tensile yield load Fy, and is a load generating such a tensile stress that sufficiently lower than the tensile yield stress σy. The fixing belt 1 has the sufficiently large tensile elastic coefficient E, and the dimension in the periphery direction thereof is not largely changed by the tensile load applied upon fixation, whereby the recording paper 18 can be pressurized at a pressure sufficient for the fixation. The fixing belt 1 has uniformity on both the inner surface and the outer surface, whereby it can stably run and uniformly pressurize.

Figs . 9A to 9C are diagrams for describing the production method of the cylindrical main body 2 of the cylindrical body 1. The cylindrical main body 2 is formed from a raw cylindrical body 21 as a raw material by using a metal mold device 20 shown in Fig. 9A. The raw cylindrical body 21 is in a form of a straight cylinder, and is formed by a paste extrusion molding method using PTFE powder, such as PTFE Fine Powder F-302 (a trade name, produced by Daikin Industries, Ltd.), as a raw material. The dimension in the axial direction, the outer diameter and the thickness (wall thickness) thereof can be appropriately determined by the cylindrical main body 2 to be produced.

A metal mold 24 of the metal mold device 20 is in a form of a cylinder, for example, a straight cylinder, and the inner diameter thereof is uniform along a straight axis line 25 and is appropriately selected corresponding to the outer diameter of the cylindrical main body 2 to be produced. Retaining means 26 is provided inside the metal mold 24 and is prevented from displacement in the direction of the axis line 25 (the horizontal direction in Figs. 9A to 9C). One end 22 of the raw cylindrical body 21 in the direction of the axis line (the horizontal direction in Figs. 9A to 9C) is detachably retained by the retaining means 26. A movable body 27 is provided inside the metal mold 24 movably in a direction getting away from the retaining means 26 along the direction of the axis line 25, and the other end 23 of the raw cylindrical body 21 in the direction of the axis line in an occlusive state is detachably retained by the movable body 27.

The retaining means 26 is equipped with a compressed gas supplying tube 28 that is formed in a rigid and substantially straight cylindrical form and is partially inserted in the metal mold 24. The compressed gas supplying tube 28 can be adjusted with an attaching member 29 for the inserted length thereof into the metal mold 24 in the vicinity of one end 30 of the metal mold 24 in the direction of the axis line and is fixed to the one end 30 of the metal mold 24. At the other end 31 of the metal mold 24, a stopper 32 is provided with another attaching member 33 adjustably in the inserted length into the metal mold 24. The stopper 32 restricts the movement of the movable body 27.

As shown in Fig. 9A, the raw cylindrical body 21 is provided in the metal mold device 20 in such a manner that one end 22 of the raw cylindrical body 21 is fixed by retaining with the retaining means 26, and the other end 23 is movably retained by the movable body 27 in the direction getting away from the one end 22 (the right-hand direction in Fig. 9A) inside the metal mold 24. Under this state, the raw cylindrical body 21 is connected to the gas supplying tube 28 at the one end 22, and the other end 23 is occlusive. Under the state where the raw cylindrical body 21 is retained, the raw cylindrical body 21 is heated by heating means provided in the metal mold device 20 to an expansion temperature (for example, from 250 to 310°C) that is higher than the softening point of the raw cylindrical body 21 but lower than the melting point thereof, a compressed gas is supplied to the raw cylindrical body 21 through the gas supplying tube 28. According to the operation, as shown in Fig. 9B, the raw cylindrical body 21 is expanded at least in the radial direction, as well as in the direction of the axis line in this embodiment. The raw cylindrical body 21 is expanded in the radial direction until it is in contact with the inner surface of the metal mold 24, and is elongated and expanded in such a direction along the axial direction that the other end 23 of the raw cylindrical body 21 gets away from the one end 22 thereof until the movable body 27 is prevented from displacement with the stopper 32.

After expanding as shown in Fig. 9B, the raw cylindrical body is cooled under the state where pressure is applied with the compressed gas, i.e., the raw cylindrical body is expanded, whereby a molded article 35 is obtained as shown in Fig. 9C. When the molded article 35 is increased in temperature by heating again, it suffers heat shrinkage. In order to prevent the shrinkage, for example, an insertion mold having a cylindrical outer surface is provided inside the molded article 35, and the molded article 35 is heated to a temperature of more than the expanding temperature but less than a temperature, at which decomposition of the polytetrafluoroethylene resin considerably occurs (for example, less than 390°C), so as to effect a thermal fixing treatment, whereby the cylindrical main body 2 is formed. According to the procedures, the porous cylindrical main body 2 having through pores 6 having varied inner shapes uniformly dispersed thereon can be obtained.

As the insertion mold inserted in the molded article 35, for example, a tubular body formed of aluminum is used. Upon manufacturing the cylindrical main body 2, both end parts, which have not been expanded but remaining to have a small diameter, i.e., both outside parts with respect to the center expanded part, may be appropriately cut off before the thermal fixing treatment, for example, at cut positions 36 and 37 shown by virtual lines.

A resin for forming the coating layer 5 is coated on at least one of the inner and outer surfaces 7, 8 of the cylindrical main body 2 thus obtained, or on the inner surface 7 in the case of this embodiment used as a fixing belt, and then cured to form the coating layer 5 on the inner periphery 3 of the cylindrical main body 2. The resin for forming the coating layer 5 is coated in a state of solution.

Upon coating the resin for forming the coating layer 5, the surface of the cylindrical main body 2, on which the coating layer is to be formed, i.e., the inner surface 7 in this embodiment, may be subjected to a pretreatment or may not be subjected to a pretreatment. As the pretreatment, a defluorination treatment is preferably carried out, by which affinity to the resin to be coated is imparted to the cylindrical main body 2, and thus the coated resin is liable to be attached thereto by preventing from repelling. Thus, the interface affinity can be improved, whereby further firm adhesion of the coating layer can be realized.

When the resin for forming the coating layer is coated on the inner surface 7 of the cylindrical main body 2, the resin penetrates in the through pores 6 and cured in that state. The resin for forming the coating layer is coated in a state of a solution, i.e., a state having a low viscosity providing good flowability, whereby it is liable to penetrate into the through pores 6. Even when the solution in such a state is coated, curing of the resin with a curing agent is possible through drying (evaporation). Accordingly, the coating layer 5 is formed in such a state that the coating layer penetrates into the through pores 6, i.e., partially penetrates into the cylindrical main body 2, whereby the cylindrical body 1 is obtained. In the cylindrical body 1 thus obtained, a part 40 of the coating layer 5 (shown in Fig. 1) penetrating into the through pores 6 is firmly engaged with the cylindrical main body 2, whereby the cylindrical main body 2 and the coating layer 5 are firmly adhered.

According to the cylindrical body 1 of this embodiment as described in the foregoing, on the cylindrical main body 2 formed of a PTFE resin, which has low affinity with other resins, the coating layer 5 formed of the other resins is firmly adhered, whereby the cylindrical body 1 having accumulated composite layers, which are not released from each other, can be obtained. Furthermore, in the case where the through pores 6 have such a form that the inner shape thereof is changed, the part 40 penetrating into the through pores 6 is further liable to be engaged with the cylindrical main body 2, so as to realize further firm adhesion. In the case where the through pores 6 are uniformly dispersed, uniform adhesion force can be obtained, whereby local releasing can be certainlyprevented.

The cylindrical body 1 is used as a fixing belt as described in the foregoing. The surface that is in contact with the recording paper 18 upon fixing is the outer surface 8 of the cylindrical main body 2 formed of a PTFE resin, whereby it has good toner releasability, and the toner is difficult to be attached to the fixing belt 1 (cylindrical body) . Since the cylindrical body 1 is constituted by forming the coating layer 5 on the cylindrical main body 2, the cylindrical main body 2 which is in contact with the recording paper 18 can have a sufficient thickness, and the cylindrical main body 2 having good toner releasability is not lost when friction occurs, so as to obtain high durability.

In order to further improve the toner releasability, it is preferred to coat a silicone oil on the outer surface of the fixing belt 1 (cylindrical body), and it may be coated upon fixing. The cylindrical main body 2 can be impregnated with the silicone oil owing to the porous nature thereof, that is, the main body 2 retains the silicone oil staying in the through pores 6, and the retention property of the silicone oil is improved in comparison to the case where it is simply coated on the outer surface, whereby a preferred state where the toner releasability is improved can be certainly maintained. Therefore, offset upon fixing can be certainly prevented to fix the toner image in a good fixing condition, and thus a clear fixed image can be obtained. Since the silicone oil also has a function of preventing wear-out of the cylindrical main body, wear-out of the cylindrical main body can be suppressed by certainly retaining the silicone oil, so as to achieve extremely high durability.

The cylindrical main body 2 has a seamless cylindrical form, and the inner surface 7 and the outer surface 8 have a center line average roughness Ra of 0.5 µm. Therefore, the inner surface 7 and the outer surface 8 are macroscopically uniform particularly as a fixing belt, and thus the coating layer 5 formed by coating on the inner surface 7 is also uniform. Consequently, the recording paper 18 can be uniformly heated and pressurized, and stable running can be attained without deviance in the axial direction with respect to the belt rolls 13 to 15, whereby fixation with high precision can be carried out.

The cylindrical main body 2 has the outer dimension described in the foregoing. Therefore, it can be free of difficulty in production due to difficulty in production of the metal mold device 20 as in the case where the outer diameter is less than 10 mm or exceeds 100 mm, whereby it can be produced with low cost. When the outer diameter is less than 10 mm, it is difficult to coat the resin on the inner surface 7, and the formation of the coating layer 5 becomes difficult. When the outer diameter exceeds 100 mm, since the inner surface 7 and the outer surface 8 become too broad, it becomes difficult that the resin is uniformly coated, and the uniform coating layer 5 is difficult to be formed. On the other hand, because the outer diameter is from 10 to 100 mm in the embodiment, the uniform coating layer 5 can be formed.

The cylindrical main body 2 has a thickness of from 50 to 200 µm. Therefore, it is prevented from lowering in durability as in the case where the thickness is less than 50 µm, and it is prevented from too large rigidity as in the case where the thickness exceeds 200 µm. Consequently, such a cylindrical body 1 can be obtained that sufficient durability is obtained, and the curvature thereof can be partially changed, and thus it can be preferably used as a fixing belt.

The air permeability of the cylindrical main body 2 is from 500 to 30,000 second per 100 cc. Therefore, the effect of the through pores 6 can be prevented from decreasing as in the case where upon coating the silicone oil on the fixing belt, the silicone oil is difficult to penetrate in the through pores 6 to decrease the retention property when the air permeability exceeds 30,000 second per 100 cc. Furthermore, it is prevented from excessive penetration as in the case where the air permeability is lower than 500 seconds per 100 cc. Consequently, the coating layer appropriately penetrates to achieve adhesion to the cylindrical main body with high adhesive force, and to obtain good retention property of the silicone oil.

The cylindrical main body 2 has a maximum pore diameter of the through pores 6 of 0.2 µm or less and a porosity of from 25 to 50%. Therefore, the air permeability can be prevented from exceeding the foregoing range as in the case where the porosity is less than 25%, and also can be prevented from becoming lower than the foregoing range as in the case where the porosity exceeds 50%. It is also prevented from particles, such as the toner, being easily attached due to a rough surface as in the case where the maximum pore diameter exceeds 0.2 µm.

The cylindrical body 1 has the mechanical strength relating to peripheral tensile force as described in the foregoing. The fixing belt of, for example, a duplicator as described in the foregoing does not receive a load exceeding 2.5 kgf per width of 1 cm in the axial direction and does not receive such a tensile load that causes a tensile stress exceeding 150 kg/cm². Therefore, the cylindrical body 1 is imparted with high durability and can be preferably used as the fixing belt. The fixing belt does not receive such a tensile load that largely changes the dimension in the periphery direction of the belt having the foregoing tensile elastic coefficient value, and therefore, the cylindrical body 1 can be used as the fixing belt under suitable conditions with small elongation.

Because the resin for forming the coating layer 5 is a crosslinking resin, such as a fluorine resin, an imide resin and a PES resin, the coating layer 5 can have a high tensile strength and high heat resistance. Therefore, the cylindrical body 1 is formed by combining with the cylindrical main body 2 formed of a PTFE resin having high heat resistance, and can be preferably used as a fixing belt that is required to have high heat resistance.

According to the embodiment of the production method, the cylindrical body 1 can be produced. The cylindrical main body has a seamless cylindrical form, and the inner surface 7 and the outer surface 8 are uniform, whereby the uniform coating layer can be easily formed by uniformly coating the resin. Furthermore, because the cylindrical main body 2 is porous, the resin can penetrate into the through pores 6 by coating the resin, so as to prevent the resin from repelling. The resin can be cured under that state to form the coating layer 5, whereby the composite cylindrical body 1 can be easily produced.

Because the coating layer 5 is formed by coating the resin on the cylindrical main body 2, the resin for forming the coating layer can be uniformly and easily coated, and the uniform coating layer can be easily formed. Therefore, the cylindrical body 1 can be easily produced at low cost.

The cylindrical main body 2 is produced in such a manner that the raw cylindrical body 21 is formed by paste extrusion molding, and the raw cylindrical body 21 is subjected to the expansion treatment and then the thermal fixing treatment. Therefore, the through pores are uniformly formed, and thus the cylindrical main body 2 having the foregoing characteristics can be produced. Consequently, the cylindrical main body 2, on which the uniform coating layer 5 is to be formed by coating the resin, can be easily produced. The surface of the cylindrical main body 2, on which the coating layer 5 is to be formed, may be subjected to the defluorination treatment, and in this case, the resin constituting the coating layer 5 has good affinity with the cylindrical main body 2 and is liable to be attached thereto by preventing repelling upon coating, whereby the coating operation becomes easy, and the uniform coating layer 5 can be easily formed. Moreover, by improving the interface affinity in this manner, further firm adhesion can be attained. The resin for forming the coating layer 5 is coated in the state of a solution as dissolved in a solvent, and thus the viscosity thereof can be lowered to make the resin liable to penetrate into the through pores 6. Therefore, the cylindrical body can be easily produced.

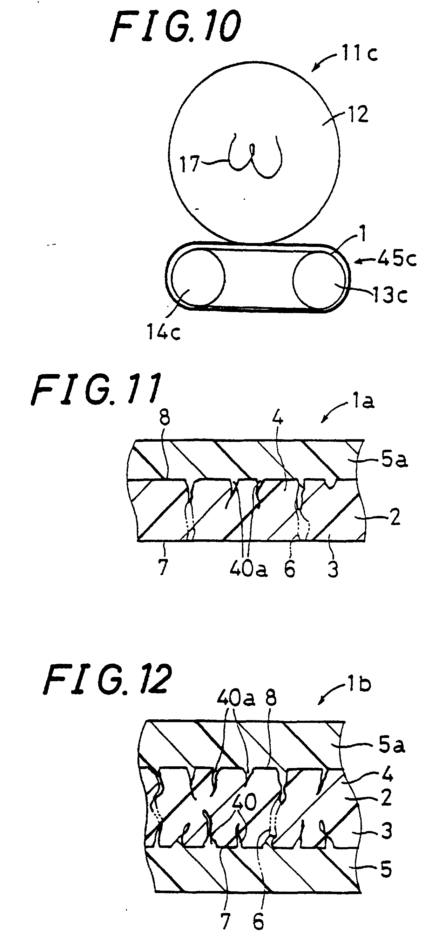

Fig. 10 is a schematic elevational view showing another fixing unit 11c equipped with the cylindrical body 1. The cylindrical body 1 may be installed in the fixing unit 11c shown in Fig. 10 instead of the fixing unit 11 shown in Figs. 7 and 8. In Fig. 10, the same constitutional components as in fixing unit 11 are attached with the same symbols, and the analogous constitutional components are attached with such symbols composed of the same number with a suffix "c". Description will be made only for the characteristic features, and description for the common denominators will be omitted for avoiding duplication. In the fixing unit 11c, the fixing belt 1 is hanged and wounded on two belt rolls 13c and 14c of a roll device 45c. The belt roll 14c is a tension roll for applying tension on the belt that receives a spring force by spring means as similar to the belt roll 14 of the fixing unit 11. The cylindrical body 1 can be preferably used as a fixing belt of the fixing unit 11c of such a constitution to attain the similar effect.

Fig. 11 is an enlarged cross sectional view showing a part of a cylindrical body 1a as another embodiment of the invention. The cylindrical body 1a is analogous to the cylindrical body 1 of the embodiment shown in Figs. 1 to 9C. Thus, the same constitutional components are attached with the same symbols, and the analogous constitutional components are attached with such symbols composed of the same number with a suffix "a". Description will be made only for the characteristic features, and description for the common denominators will be omitted for avoiding duplication. While the coating layer 5 is formed on the inner periphery 3 of the cylindrical main body 2 in the cylindrical body 1, a coating layer 5a, instead of the coating layer 5, is formed on the outer periphery 4 by coating a resin on the outer surface 8 of the cylindrical main body 2 and curing. The coating layer 5a also has a part 40a penetrating into the through pores 6 as similar to the coating layer 5, and is firmly adhered thereto. The coating layer 5a is formed of the same resin as the coating layer 5. The cylindrical body 1a can attain the same effect as the cylindrical body 1 except for the effect obtained by forming the outer surface of the cylindrical body 1 with the cylindrical main body 2.

Fig. 12 is an enlarged cross sectional view showing a part of a cylindrical body 1b as a further embodiment of the invention. The cylindrical body 1b is analogous to the cylindrical bodies 1 and 1a of the embodiments shown in Figs. 1 to 10, and thus the same constitutional components are attached with the same symbols. Description will be made only for the characteristic features, and description for the common denominators will be omitted for avoiding duplication. The coating layer 5 is formed on the inner periphery 3 of the cylindrical main body 2 in the cylindrical body 1, and the coating layer 5a is formed on the inner periphery 3 of the cylindrical main body 2 in the cylindrical body 1a. In the cylindrical body 1b on the other hand, the coating layers 5 and 5a are respectively formed. The cylindrical body 1b also can attain the same effect except for the effect obtained by forming the outer surface of the cylindrical body 1 with the cylindrical main body 2.

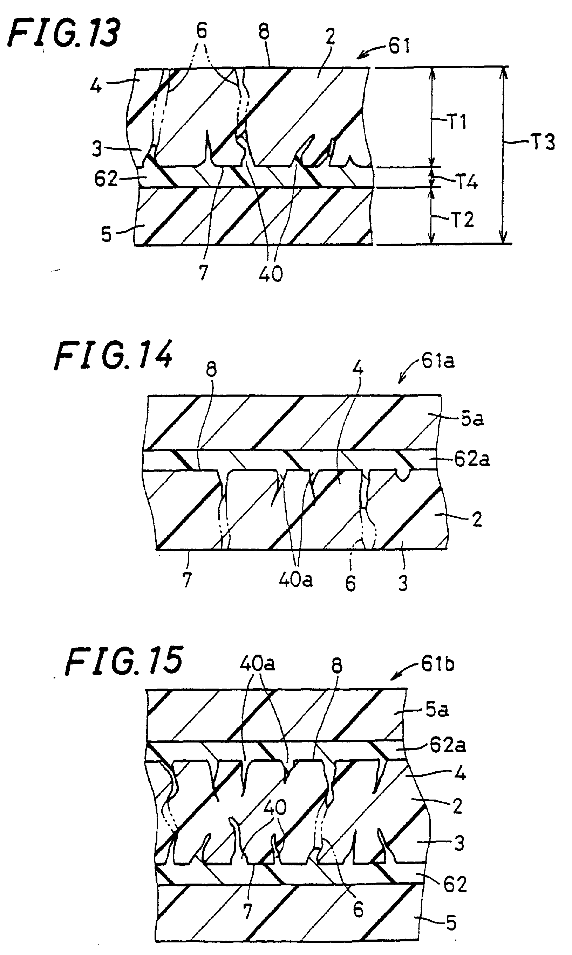

Fig. 13 is an enlarged cross sectional view showing a part of a cylindrical body 61 as a still further embodiment of the invention. Fig. 13 corresponds to Fig. 1. The cylindrical body 61 shown in Fig. 13 is analogous to the embodiments shown in Figs. 1 to 12, and the same constitutional components are attached with the same symbols. In the cylindrical body 61, an intervening layer 62 intervenes between the cylindrical main body 2 and the coating layer 5 on the inner periphery 3 of the cylindrical main body 2. The cylindrical main body 2 is formed of a PTFE resin as similar to the foregoing, and such a state is attained that the intervening layer partially penetrates into a large number of the through pores 6 thereof. A synthetic resin constituting the intervening layer 62 is formed of such a material as a primer and rubber. Examples of the material of the intervening layer include fluorine rubber and Daiel™ Latex (a trade name, produced by Daikin Industries, Ltd.). The thickness T4 of the intervening layer 62 may be, for example, from 1 to 10 µm. With respect to the characteristics relating to wettability of the synthetic resin constituting the intervening layer 62, the material of the intervening layer is selected to satisfy the equations θ1 > θ2 and θ1 > θ3, in which θ1 represents a contact angle of the coating layer upon directly dropping a liquid coating layer containing a solvent on the surface of the PTFE cylindrical main body, θ2 represents a contact angle of the intervening layer upon dropping a liquid intervening layer containing a solvent on the surface of the PTFE cylindrical main body, and θ3 represents a contact angle of the coating layer upon dropping a liquid coating layer containing a solvent on the surface of the intervening layer. The other parts of the constitution of the cylindrical body 61 are the same as those in the foregoing embodiments.

Fig. 14 is an enlarged cross sectional view showing a part of a cylindrical body 61a as a still further embodiment of the invention. Fig. 14 corresponds to Fig. 11. This embodiment is analogous to the foregoing embodiments, and the same constitutional components are attached with the same symbols. In this embodiment, particularly, an intervening layer 62a is formed between the cylindrical main body 2 and the coating layer 5a on the outer periphery of the cylindrical body 2. The other parts of the constitution are the same as those in the foregoing embodiments.

Fig. 15 is an enlarged cross sectional view showing a part of a cylindrical body 61b as a still further embodiment of the invention. Fig. 15 corresponds to Fig. 12. This embodiment is also analogous to the foregoing embodiments, and the same constitutional components are attached with the same symbols. What is noted in this embodiment is that the intervening layers 62 and 62a are formed between the cylindrical main body 2 and both the coating layers 5 and 5a on the inner and outer peripheries of the cylindrical main body 2, respectively. The other parts of the constitution are the same as those in the foregoing embodiments.

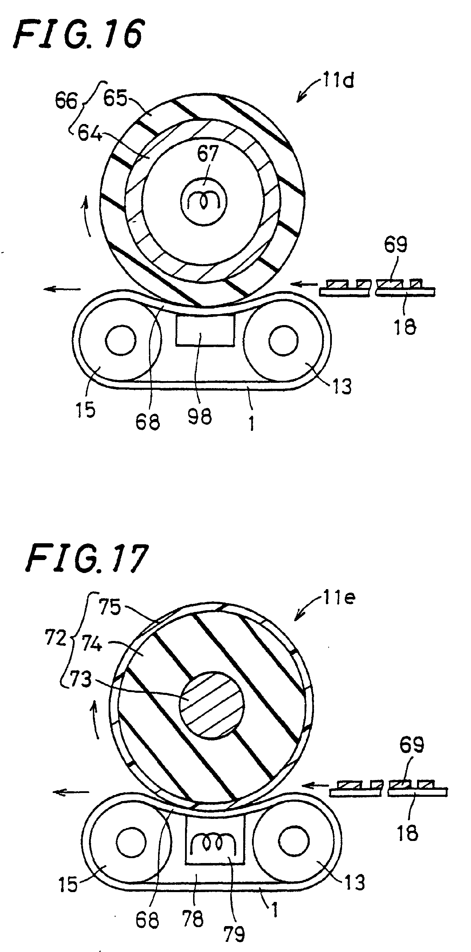

Fig. 16 is a schematic cross sectional view showing a fixing unit 11d as another embodiment of the invention. This embodiment is also analogous to the foregoing embodiments, and the same constitutional components are attached with the same symbols. In the fixing unit 11d, a fixing roll 66 is constituted by forming a cover layer 65 formed of a material having good toner releasability, such as silicone rubber having elasticity, on an outer periphery of a core body 64 in a form of a straight cylinder formed of a metal having high thermal conductivity, such as aluminum. An electric heater 67 for a heat source is inserted in the interior of the core body 64, and the heater 67 is supplied with electric power and is controlled in such a manner that the outer surface of the cover layer 65 is maintained at a temperature suitable for thermal fixing, for example, from 150 to 180°C. The fixing roll 66 contains the core body 64 and the cover layer 65.

A fixing belt 1 according to the invention is hanged and wounded on rolls 13 and 15 under the fixing roll 66. An upper hanged part 68 of the fixing belt 1 is in contact with the surface of the fixing roll 66 through a plane over the prescribed nip width in the periphery direction of the fixing belt 1, and pressurized by a pressing member 98 having elastic rebound. A recording medium 18 is transported by sandwiching between the upper hanged part 68 of the fixing belt 1 and the fixing roll 66. The recording medium 18 may be, for example, recording paper, and a toner image 69 is formed on the upper surface thereof in Fig. 16. The recording medium 18 is sandwiched between the fixing belt 1 and the fixing roll 66 and applied with heat and pressure, whereby the toner image 69 is melted by heating to be attached to the recording medium 18, and the thermal fixing is thus carried out.

The fixing roll 66 is rotationally driven at a constant rotation speed by a driving source containing a motor. The fixing belt 1, i.e., the rolls 13 and 15, are rotationally driven in such a manner that the speed at the outer surface of the fixing belt 1 is identical to the speed of the outer surface of the fixing roll 66. In another embodiment of the invention, it may be constituted that the fixing belt 1 and the rolls 13 and 15 are passively driven by the drive of the fixing roll 66.

Fig. 17 is a schematic cross sectional view showing a fixing unit 11e as a further embodiment of the invention. The constitution of the fixing unit 11e is also analogous to the foregoing embodiments, and the same constitutional components are attached with the same symbols. A fixing roll 72 in Fig. 17 are constituted by containing a core body 73 in a form of a straight cylinder, an intermediate layer 74 formed of a material having elastic rebound, such as rubber, formed on an outer periphery of the core body 73, and a cover layer 75 covering an outer periphery of the intermediate layer 74. The fixing belt 1 is hanged and wounded on rolls 13 and 15 as similar to the foregoing embodiments, and an upper hanged part 68 thereof is in contact with the surface of the cover layer 75 of the fixing roll 72 through a plane over the prescribed nip width in the periphery direction of the fixing belt 1. What is noted in this embodiment is that a hater 79 is arranged in a space 78 surrounded by the fixing belt 1. The heater 79 heats the fixing belt 1 directed to the inner periphery of the upper hanged part 68 of the fixing belt 1 on the side of the fixing roll 72. According to the configuration, a toner image 69 on a recording medium 18 transported between the upper hanged part 68 of the fixing belt 1 and the fixing roll 72 is heated and melted. The toner image 69 is heated by the heater 79 to a temperature suitable for thermal fixing, for example, from 150 to 180°C as described in the foregoing. The other parts of the constitution in Fig. 17 are the same as those in the foregoing embodiments.

Instead of the fixing belt 1 in Figs. 16 and 17, the fixing belts 1a, 1b 61, 61a and 61b relating to the embodiments shown in Figs. 11 to 15 may be used.

Fig. 18 is a schematic cross sectional view showing an apparatus for forming an image 81 of the electrophotographic method having the fixing unit 11 according to the invention installed therein. The apparatus for forming an image 81 may be, for example, a duplicator or a printer, and the invention may be practiced in association with other purposes. A photoreceptor 83 having a straight cylindrical form is formed to have no end in the periphery direction, and has, for example, a straight cylindrical form shown in Fig. 18. In a still further embodiment of the invention, it may be a form of a seamless belt. The photoreceptor 83 is driven at a constant rotation speed as shown by an arrow 84. The surface of the photoreceptor 83 is entirely charged to one polarity over the full length in the axial direction by main charging means 85. The surface of the photoreceptor 83 having been uniformly charged is irradiated with light 87 corresponding to an image by exposing means 86, so as to form an electrostatic latent image on the surface of the photoreceptor 83. The light 87 may be either visible light or light outside the visible light region, and may be a laser beam.

The electrostatic latent image on the photoreceptor 83 is visualized with a toner by developing means 88. The toner image on the photoreceptor 83 is transferred to a recording medium 18 by transferring means 89, such as a corona discharging device, and according to the operation, the toner image 69 is transferred to the upper surface of the recording medium 18 in Fig. 18. Transportingmeans 91 and 92 transport the recording medium 18, and the recording medium 18 having the toner image 69 formed thereon is transported to a fixing unit 11 according to the invention. Thus, the toner image 69 on the recording medium 18 is heated and melted to carry out thermal fixing. The thermal fixing unit 11 may have such constitutions as described with reference to Figs. 1 to 17.

Fig. 19 is a diagram for describing a contact angle θ2 upon forming an intervening layer 62 by coating a liquid intervening layer on the surface of the cylindrical main body 2. When the liquid intervening layer 62 is coated on the surface of the solid cylindrical main body 2 during the production method, the liquid intervening layer forms a tangent line 94. The contact angle θ2 is an angle formed between the surface of the cylindrical main body 2 and the tangent line 94. The contact angle θ1 is a contact angle θ1 when a liquid coating layer 5 is coated on the surface of the solid cylindrical main body 2 during the production method, and the contact angle θ3 is a contact angle θ3 when a liquid coating layer 5 is coated on the surface of the solid intervening layer 62 during the production method.

The inventors produced a cylindrical body according to the invention, and the mechanical strength and the like of the cylindrical body were confirmed. A PTFE raw cylindrical body having an outer diameter of 6 mm and a thickness (wall thickness) of 0.35 mm was produced by the paste extrusion method using PTFE Fine Powder F-302 (a trade name, produced by Daikin Industries, Ltd.) as a raw material. The PTFE raw cylindrical body was subjected to an expansion treatment to the radial direction by using the metal mold device 20 shown in Fig. 9. The cylindrical metal mold 24 has an inner diameter of 24 mm, the length in the axial direction of the expanding part that is expanded to the radial direction is set at 400 mm. After heating at a temperature 300°C for 20 minutes, pressurized air having a pressure of 3 kgf/cm² was supplied to expand the raw cylindrical body, and then the cylindrical body under the pressurized state was cooled with water to obtain an expanded molded article. The molded article was formed into a length of 350 mm by cutting both ends thereof. An aluminum insertion mold having an outer diameter of 22 mm, an inner diameter of 20 mm and a length of 400 mm was inserted to the molded article, which was then heated in a furnace at 320°C for 10 minutes, whereby the thermal fixing treatment was carried out to obtain a cylindrical main body. The cylindrical main body had an inner diameter of 22 mm and a thickness of 0.1 mm, and the porous characteristics of the cylindrical main body were an air permeability (Gurley number) of 2,000 seconds per 100 cc, a porosity of 35% and a maximum pore diameter of 0.1 µm or less.

A fluorine resin was selected as the resin for forming the coating layer. A solution X1 containing 50% by weight of Zeffle GK-510 (a trade name of a fluorine resin paint, produced by Daikin Industries, Ltd.) as a main component and 50% by weight of butyl acetate as Coronate HX (a trade name, produced by Nippon Polyurethane Co., Ltd.) Y1 as an isocyanate curing agent were mixed at a ratio of 100 parts by weight of the solution X1 with 12 parts by weight of the curing agent Y1, and butyl acetate was further added to the resulting mixed solution for dilution and preparation at a ratio of 100 parts by weight of the mixed solution with 20 parts by weight of butyl acetate. Absorbent gauze was sufficiently impregnated with the coating composition thus prepared (i.e., a solution of the resin for forming the coating layer), and the gauze was passed through the interior of the cylindrical main body to coat the coating composition on the entire inner surface of the cylindrical main body. The cylindrical main body was irradiated with an infrared ray lamp for 2 hours to effect drying of the solvent and curing of the resin associated thereto (owing to the reaction between the functional group of the main component and the curing agent) . A coating layer having a thickness of 0.03 mm was formed of the fluorine resin on the inner periphery of the cylindrical main body to complete a cylindrical body (a first example product).

As for an article produced in the same manner as in the production of the first example product, the same coating composition was coated on the outer periphery of the cylindrical main body, followed by drying and curing, to form a coating layer on the outer periphery to complete a cylindrical body having coating layers on both of the inner and outer peripheries of the cylindrical main body (a second example product) . The second example product had a total thickness of 0.15 mm, and therefore, the thickness of the coating layer formed on the outer periphery of the cylindrical main body was 0.02 mm.

The strength against peripheral tensile force was measured for the first and second example products. In order to confirm the fact that the strength was improved by combining the coating layer, a cylindrical main body (having no coating layer) produced in the same manner as in the production of the first and second example products was prepared as a first comparative product, and the strength against peripheral tensile force was measured for the first comparative product. The measurement was carried out in the following manner. Parts having a width of 10 mm in the axial direction as shown in Fig. 4 were cut out from the first and second example product and the first comparative product, and they were cut off at one position in the periphery direction to form small pieces (test pieces) in a strip form shown in Fig. 5. The test pieces were set on a tensile test machine to make a chuck distance of 40 mm, and a peripheral tensile load was applied thereto at a tensile speed of 200 mm/min. Autograph (produced by Shimadzu Corp.) was used as the tensile test machine. The values of strength thus measured are shown in Table 1 below.

**TABLE 1**

| Item (unit) | First example product | Second example product | First comparative product |
|---|---|---|---|
| Thickness of cylindrical body (mm) | 0.13 | 0.15 | 0.1 |
| Yield strength (stress) (kg/cm²) | 240 | 230 | 60 |
| Tensile elastic coefficient (kg/cm²) | 11,000 | 8,000 | 3,100 |

It was apparent from Table 1 that the first comparative product having no coating layer formed did not exhibit a tensile yield stress and a tensile elastic coefficient that were suitable as the belt, whereas the first and second example products had a tensile yield stress of 240 kgf/cm² and 230 kgf/cm², both of which were larger than 150 kgf/cm², and a tensile elastic coefficient of 11,000 kgf/cm² and 8,000 kgf/cm², both of which were larger than 7,000 kgf/cm². Thus, it had been confirmed that they had mechanical strength that was suitable for the belt.

In order to confirm usefulness of the first and second example products as the belt, a belt driving device having three rolls each having an outer diameter of 5 mm as similar to the belt driving device having the rolls shown in Fig. 8 was fabricated, and in an atmosphere at 150°C continuous operations for 240 hours were carried out for the respective example products, which was applied with a tension of 2 kgf, at a peripheral speed (running speed) of 5 cm/sec. Release and elongation of the coating layer were observed for the first and second example product, but no change was observed. Thus, it had been confirmed that they had usefulness as the belt (including the fixing belt) installed in the apparatus.

Furthermore, in order to confirm usefulness of the first example product as a fixing belt, a test for retaining property of a silicone oil was carried out. A silicone oil having a viscosity of 500 centistokes was dropped on the inner and outer surfaces of the first example product, and the affinity and the permeability of the silicone oil on the surface were observed. Since the first example product had a white turbid color owing to the material (porous material) thereof, the change in transmission of light (increase of light transmittance) caused by permeation of the silicone oil was observed. In the case where the silicone oil was dropped on the outer surface having no coating layer (on which the porous cylindrical main body was exposed), the silicone oil was permeated and penetrated to transmit light (i.e., became a state approaching transparency), and a red article arranged on the side of the inner periphery of the first example product could be clearly confirmed. In the case where the silicone oil was dropped on the inner surface having the coating layer formed, permeation of the silicone oil was prevented by the coating layer, and the product still exhibited the white turbid color (opacity) . It was confirmed from the results that the silicone oil could be retained by impregnation, and it was also confirmed that leakage of the silicone oil to the side of the inner surface could be prevented.

Cylindrical bodies having a coating layer formed of a resin other than a fluorine resin formed thereon were confirmed for the mechanical strength. A cylindrical main body was produced in the same manner as in the production method of the cylindrical main body (the first comparative product) for the first and second example products except that the temperature for the thermal fixing treatment was changed to 340°C. The resulting cylindrical main body had an inner diameter of 22 mm and a thickness of 0.1 mm, and the porous characteristics of the cylindrical main body were an air permeability (Gurley number) of 2,500 seconds per 100 cc, a porosity of 33% and a maximum pore diameter of 0.1 µm or less. The inner surface of the cylindrical main body was then subjected to a defluorination treatment by using Tetraetch (a trade name, produced by Junkosha Inc.), which was a liquid having metallic sodium dispersed therein.

An imide resin was used as the resin for forming the coating layer. N-methylpyrrolidone was added to HI-600A (a trade name, produced by Hitachi Chemical Co., Ltd.), which was a solution of polyamideimide before curing, for dilution and preparation at a ratio of 100 parts by weight of the polyamide resin solution with 15 parts by weight of N-methylpyrrolidone. The resulting coating composition was coated in the same manner as in the case of the fluorine resin on the inner surface having been subjected to the defluorination treatment. By carrying out the defluorination treatment, repelling of the coating composition, specifically N-methylpyrrolidone, could be prevented, and the coating composition could be suitably coated. The cylindrical main body was then heated by allowing to stand in an atmosphere at 250°C for 1 hour and subsequently in an atmosphere at 300°C for 30 minutes, so as to effect curing. A coating layer having a thickness of 0.03 mm was formed of the polyamideimide resin on the inner periphery of the cylindrical main body to complete a cylindrical body (a third example product).

A PES resin was used as the resin for forming the coating layer. N-methylpyrrolidone was added to PES100P (a trade name, produced by Sumitomo Chemical Co., Ltd.), which was a solution of a PES resin for coating, for dilution and preparation at a ratio of 100 parts by weight of the PES resin solution with 15 parts by weight of N-methyl-2-pyrrolidone. The resulting coating composition was coated on the inner surface having been subjected to the defluorination treatment in the same manner as in the case of the imide resin. By carrying out the defluorination treatment, the coating composition could be suitably coated as similar to the case of the imide resin. The cylindrical main body was then heated by allowing to stand in an atmosphere at 200°C for 30 minutes and subsequently in an atmosphere at 250°C for 30 minutes, so as to effect curing. A coating layer having a thickness of 0.03 mm was formed of the PES resin on the inner periphery of the cylindrical main body to complete a cylindrical body (a fourth example product).

The strength against peripheral tensile force was measured for the third and fourth example products. In order to confirm the fact that the strength was improved by combining the coating layer, a cylindrical main body (having no coating layer) produced in the same manner as in the production of the third and fourth example products was prepared as a second comparative product, and the strength against peripheral tensile force was measured for the second comparative product. The measurement was carried out by forming a test piece as similar to the case of the first and second example products and the first comparative product, and by applying a tensile load under the same conditions. The results of the measurement are shown in Table 2 below.

**TABLE 2**

| Item (unit) | Third example product | Fourth example product | Second comparative product |
|---|---|---|---|
| Thickness of cylindrical body (mm) | 0.13 | 0.13 | 0.1 |
| Yield strength (stress) (kg/cm²) | 290 | 300 | 55 |
| Tensile elastic coefficient (kg/cm²) | 12,000 | 12,000 | 3,000 |

It was apparent from Table 2 that the second comparative product having no coating layer formed did not exhibit a tensile yield stress and a tensile elastic coefficient that were suitable as the belt, whereas the third and fourth example products had a tensile yield stress of 290 kgf/cm² and 300 kgf/cm², both of which were larger than 150 kgf/cm², and a tensile elastic coefficient of 12,000 kgf/cm², which was larger than 7,000 kgf/cm². Thus, it had been confirmed that they had mechanical strength that was suitable for the belt.

The embodiments and the examples described in the foregoing are mere preferred examples cited for describing the invention in detail, but the shapes, the dimensions, the materials and the like can be changed within the scope of the invention, and there are various preferred examples other than those described herein. For example, the coating layer may be formed in the following manner. It is possible that a polyamide acid solution formed of a pyromellitic acid dianhydride and 4,4'-diaminophenyl ether as raw materials represented by Kapton (a trade name, produced by Du Pont Inc.) is coated to effect penetration and impregnation into the through pores, followed by curing by heat, so as to form a coating layer formed of the polyimide resin. It is also possible that a varnish of bismaleimide formed of diaminophenylmethane and maleic anhydride as raw materials represented by Kerimide (a trade name, produced by Rhone Poulenc Inc.) is coated to effect penetration and impregnation into the through pores, followed by curing by heat, so as to form a coating layer formed of the polyaminobismaleimide resin. Furthermore, it is also possible that Total Aromatic Polyimide Varnish (a trade name, produced by Toray Industries, Inc.) is coated to effect penetration and impregnation into the through pores, followed by curing by heat, so as to form a coating layer of the total aromatic polyimide.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

According to the invention of claim 1, a cylindrical main body formed of a polytetrafluoroethylene resin and an a coating layer formed of the other resin formed on at least one of the inner and outer peripheries of the cylindrical main body are firmly adhered, whereby a cylindrical body having high durability and an accumulated composite without releasing can be obtained.

According to the invention of claim 2, a cylindrical main body formed of a polytetrafluoroethylene resin and an a coating layer formed of the other resin formed on the inner periphery of the cylindrical main body are firmly adhered, whereby a cylindrical body having high durability and an accumulated composite without releasing can be obtained. The cylindrical body used as a fixing belt has good toner releasability, and a toner is difficult to be attached thereto. The cylindrical body can be formed of a cylindrical main body having a sufficient thickness, and thus high durability can be obtained. The cylindrical main body is impregnated with a silicone oil, and it can be retained on the outer periphery owing to excellent retention property, whereby offset is certainly prevented to fix a toner image in good fixing conditions, so as to obtain a clear fixed image. The silicone oil also has an effect of preventing the cylindrical main body from wear-out, and thus wear-out of the cylindrical main body is suppressed by certainly retaining the silicone oil to achieve extremely high durability.

According to the invention of claim 3, the cylindrical body has a high tensile yield strength, and the cylindrical body can be preferably used as a belt, such as a fixing belt, of an apparatus, such as the duplicator, owing to high durability.

According to the invention of claim 4, the cylindrical body has a high tensile yield stress, and the cylindrical body can be preferably used as a belt, such as a fixing belt, of an apparatus, such as the duplicator, owing to high durability.

According to the invention of claim 5, the cylindrical body has a high tensile elastic coefficient, and the cylindrical body can be preferably used as a belt, such as a fixing belt, of an apparatus, such as the duplicator, under preferred conditions with less elongation.

According to the invention of claim 6, because the cylindrical main body is produced to have the outer diameter, the thickness and the porous characteristics specified in the foregoing, the cylindrical body has high strength and excellent durability with the curvature thereof capable of being partially changed, and a cylindrical body having uniformity on the inner surface and the outer surface can be obtained. Therefore, the cylindrical body can be preferably used as a belt, such as a fixing belt, of an apparatus, such as the duplicator.

According to the invention of claim 7, the cylindrical body can have high heat resistance, and it can be preferably used as a belt for an apparatus having plural heat sources, such as a duplicator, and particularly as a fixing belt that is demanded to have high heat resistance.

According to the invention of claim 8, a cylindrical body having high heat resistance can be realized.

According to the invention of claim 9, a cylindrical body having high heat resistance can be realized.

Upon forming a coating layer formed of a synthetic resin other than a PTFE resin on an inner or outer periphery of a cylindrical main body formed of a PTFE resin by directly coating, it brings about such a problem when the coating layer does not have good wettability with the cylindrical main body in that it is difficult that the coating layer is coated over the entire surface of the inner or outer periphery of the cylindrical main body to a uniform thickness. In order to solve the problem, according to the invention of claims 10 to 12, an intervening layer formed of a primer or rubber is formed between the cylindrical main body and the coating layer. The intervening layer has good wettability with both the PTFE resin and the synthetic resin constituting the coating layer. The material constituting the intervening layer may be either a primer or rubber.

According to the invention of claim 13, the cylindrical body can have high heat resistance and, it can be preferably used as a belt for an apparatus having plural heat sources, such as a duplicator, and particularly as a fixing belt that is demanded to have high heat resistance.

According to the invention of claim 14, such a cylindrical body can be easily produced that is formed by accumulating and combining a cylindrical main body formed of a polytetrafluoroethylene resin with a coating layer formed of a resin other than the polytetrafluoroethylene resin on at least one of the inner and outer peripheries of the cylindrical main body. Furthermore, the cylindrical main body and the coating layer are firmly adhered to each other. Moreover, the resin coated on the cylindrical main body easily penetrates into the through pores, whereby the coating layer having a uniform surface can be easily formed.

According to the invention of claim 15, such a cylindrical body can be easily produced that is formed by accumulating and combining a cylindrical main body formed of a polytetrafluoroethylene resin with a coating layer formed of a resin other than the polytetrafluoroethylene resin on the inner periphery of the cylindrical main body. Furthermore, the cylindrical main body and the coating layer are firmly adhered to each other. Moreover, the resin coated on the cylindrical main body easily penetrates into the through pores, whereby the coating layer having a uniform surface can be easily formed.

According to the invention of claim 16, a cylindrical main body having through pores uniformly formed. Therefore, such a cylindrical body can be easily produced that has a uniform coating layer by coating the resin.

According to the invention of claim 17, a cylindrical main body having through pores uniformly formed. Therefore, such a cylindrical body can be easily produced that has a uniform coating layer by coating the resin. Furthermore, the cylindrical main body is subjected to a defluorination treatment to improve affinity of the resin for forming the coating layer with the cylindrical main body, whereby the uniform coating layer can be easily formed. By improving the interface affinity in this manner, further firm adhesion is attained.

According to the invention of claim 18, a cylindrical main body having through pores uniformly formed, and a cylindrical body having high heat resistance can be produced. Therefore, such a cylindrical body can be easily produced that has a uniform coating layer by coating the resin. Furthermore, the cylindrical main body is subjected to a defluorination treatment to improve affinity of the resin for forming the coating layer with the cylindrical main body, whereby the uniform coating layer can be easily formed. By improving the interface affinity in this manner, further firm adhesion is attained. Moreover, the defluorination treatment is carried out before forming the through pores, and thus the treating agent can be prevented from remaining.

According to the invention of claim 19, the resin for forming the coating layer is coated in the form of a solution, and therefore, the cylindrical body can be easily produced.

According to the invention of claims 20 to 22, a fixing unit equipped with the fixing belt of the invention is installed in an apparatus for forming an image of the electrostatic printing method, whereby a synthetic resin material excellent in toner releasability is used as the material of the coating layer to improve the durability.

## Claims

1. A cylindrical body comprising:
a cylindrical main body having plural through pores and comprising a porous polytetrafluoroethylene resin; and
a coating layer comprising a resin other than a polytetrafluoroethylene resin, the coating layer being formed on at least either an inner or an outer periphery of the cylindrical main body and partially penetrating into the through pores.

2. The cylindrical body of claim 1, wherein the cylindrical body has a peripheral tensile yield load of 2.5 kgf or more per axial width of 1 cm.

3. The cylindrical body of claim 1, wherein the cylindrical body has a peripheral tensile yield stress of 150 kgf/cm² or more.

4. The cylindrical body of claim 1, wherein the cylindrical body has a peripheral tensile elastic coefficient of 7,000 kgf/cm² or more.

5. The cylindrical body of claim 1, wherein the cylindrical body has a seamless cylindrical form having an outer diameter of from 10 to 100 mm and a thickness of from 50 to 200 µm, the pores of the cylindrical main body have a maximum pore diameter of 0.2 µm or less, a porosity of from 25 to 50% and an air permeability of from 500 to 30,000 second per 100 cc, and the cylindrical main body has a center line average roughness Ra of 0.5 µm or less with respect to surface roughness.

6. The cylindrical body of claim 1, wherein the resin constituting the coating layer is a crosslinking resin.

7. The cylindrical body of claim 6, wherein the resin constituting the coating layer is an imide resin.

8. The cylindrical body of claim 6, wherein the resin constituting the coating layer is a fluorine resin.

9. The cylindrical body of claim 1, wherein the resin constituting the coating layer is a polyether sulfone resin.

10. A cylindrical body comprising:
a cylindrical main body having plural through pores and comprising a porous polytetrafluoroethylene resin;
a coating layer comprising a synthetic resin other than a polytetrafluoroethylene resin; and
an intervening layer having good wettability with both the polytetrafluoroethylene resin and the synthetic resin constituting the coating layer,
the intervening layer being disposed between at least one of an inner periphery and an outer periphery of the cylindrical main body and the coating layer, and partially penetrating in the through pores.

11. The cylindrical body of claim 10, wherein the intervening layer comprises a primer.

12. The cylindrical body of claim 10, wherein the intervening layer comprises rubber.

13. Amethod for manufacturing a cylindrical body comprising the steps of:
coating a resin different from a polytetrafluoroethylene resin on at least one of an inner surface and an outer surface of a cylindrical main body; and
curing the resin coated on the cylindrical main body,
the cylindrical main body having a seamless cylindrical form having an outer diameter of from 10 to 100 mm and a thickness of from 50 to 200 µm, having pores having a maximum pore diameter of 0.2 µm or less, a porosity of from 25 to 50% and an air permeability of from 500 to 30,000 second per 100 cc, and having a center line average roughness Ra of 0.5 µm or less with respect to surface roughness.

14. A method for manufacturing a cylindrical body comprising the steps of:
coating a resin different from a polytetrafluoroethylene resin on an inner surface of a cylindrical main body; and
curing the resin coated on the cylindrical main body,
the cylindrical main body having a seamless cylindrical form with a polytetrafluoroethylene and having an outer diameter of from 10 to 100 mm and a thickness of from 50 to 200 µm, having pores having a maximum pore diameter of 0.2 µm or less, a porosity of from 25 to 50% and an air permeability of from 500 to 30,000 second per 100 cc, and having a center line average roughness Ra of 0.5 µm or less with respect to surface roughness.

15. The method for manufacturing the cylindrical body of claim 13 or 14, wherein the cylindrical main body is manufactured by forming a raw cylindrical body by paste extrusion; expanding the raw cylindrical body at least in a radial direction thereof at an expanding temperature of less than a melting point but equal to or more than a softening point thereof; and subjecting the expanded raw cylindrical body to a thermal fixing treatment at a thermal fixing temperature of equal to or more than the expanding temperature but less than a temperature at which decomposition of the polytetrafluoroethylene resin considerably occurs.

16. The method for manufacturing the cylindrical body of claim 13 or 14, wherein the cylindrical main body is manufactured by forming a raw cylindrical body by paste extrusion; expanding the raw cylindrical body at least in a radial direction thereof at an expanding temperature of less than a melting point but equal to or more than a softening point thereof; subjecting the expanded raw cylindrical body to a thermal fixing treatment at a thermal fixing temperature of equal to or more than the expanding temperature but less than a temperature at which decomposition of the polytetrafluoroethylene resin considerably occurs; and subjecting a surface of the raw cylindrical body having been subjected to the thermal fixing treatment, on which a coating layer is to be formed, to a defluorination treatment.

17. The method for manufacturing the cylindrical body of claim 13 or 14, wherein the cylindrical main body is manufactured by forming a raw cylindrical body by paste extrusion; subjecting a surface of the raw cylindrical body, on which a coating layer is to be formed, to a defluorination treatment; expanding the raw cylindrical body having been subjected to the defluorination treatment, at least in a radial direction thereof at an expanding temperature of less than a melting point and equal to or more than a softening point thereof; and subjecting the expanded raw cylindrical body to a thermal fixing treatment at a thermal fixing temperature of equal to or more than the expanding temperature but less than a temperature at which decomposition of the polytetrafluoroethylene resin considerably occurs.

18. The method for manufacturing the cylindrical body of claim 13 or 14, wherein a resin constituting the coating layer is coated in a solution state before curing.

19. A fixing belt for fixing by heating and pressurizing a toner image carried on a recording medium, the fixing belt being the cylindrical body of any one of claims 1 to 12.

20. A fixing unit comprising:
the fixing belt of claim 19;
a fixing roll for conveying a recording material having a toner image on one surface thereof by sandwiching with an outer surface of the fixing belt; and
a heater provided inside the fixing roll for heating and melting the toner image.

21. A fixing unit comprising:
the fixing belt of claim 19;
a fixing roll for conveying a recording material having a toner image on one surface thereof by sandwiching with an outer surface of the fixing belt; and
a heater provided in a space surrounded by the fixing belt, for heating and melting the toner image.

22. An apparatus for forming an image comprising:
a photoreceptor formed to have no end in a periphery direction thereof;
means for exposing a surface of the photoreceptor corresponding to an image to form an electrostatic latent image;
means for developing the electrostatic latent image on the photoreceptor with a toner to visualize the image;
means for transferring a toner image thus visualized on the photoreceptor to one surface of a recording medium; and
the fixing unit of claim 20 or 21 for fixing the recording medium having the toner image transferred by the transferring means.
